# EUROPEAN PATENT SPECIFICATION

(11) **EP 1 361 673 B1**
(45) Date of publication and mention of the grant of the patent: **12.01.2011**
(21) Application number: 02405512.1
(22) Date of filing: 20.06.2002
(51) Int. Cl.: H04B 3/52

(54) **Rack-based microwave bus for digital devices**
Mikrowellenbus auf Rackbasis für digitale Vorrichtungen
Bus microonde pour rack destiné à des dispositifs numériques

(30) Priority: 07.05.2002 EP 02405374
(43) Date of publication of application: 12.11.2003
(73) Proprietor: ABB Research Ltd., 8050 Zürich (CH)
(72) Inventor: Lehmann, Josef, 79761 Waldshut-Tiengen (DE); Rudolf, Paul, 5234 Villigen (CH); Zurfluh, Franz, 5200 Brugg (CH); Stanimirov, Michael, 5400 Baden (CH)
(74) Representative: ABB Patent Attorneys

(56) References cited:
- WO-A-94/14252
- PATENT ABSTRACTS OF JAPAN vol. 2000, no. 13, 5 February 2001 (2001-02-05) & JP 2000 278164 A (NEC CORP), 6 October 2000 (2000-10-06)

## Description

### TECHNICAL FIELD

The invention refers to the field of data communication between digital equipment. The invention relates to a communication bus for a digital device and to a network or digital device comprising a communication bus according to the preamble of the independent claims.

### BACKGROUND OF THE INVENTION

In the WO 94/14252 a waveguide transmission system for interference-free high data rate in-house communication is disclosed. Hollow-type rectangular waveguides suitable for microwave signal transmission in a broad frequency range equipped with separate RF transceivers for coupling microwave signals to the waveguide are proposed. The coupling is effected via microstrip-to-waveguide transitions, RF-probe-to-waveguide transitions or aperture-coupled transitions. The separate or stand-alone transceivers include each a microwave detector and oscillator, other components, such as an amplifier, a pulse modulator or a data squelch, and a controller. Data transmission over the waveguide is effected by on/off-keying, i. e. binary encoding or baseband modulation. When time domain multiplexing is used, even subtle differential path delays owing to reflections from side walls, insufficient waveguide terminations, antennas or from other imperfections in the waveguide can be problematic. Echoes, intersymbol interference and other signal fading effects must either be minimized by use of very expensive waveguide terminations, or elaborate electronic signal processing is required to achieve multiple parallel data channels with reasonable data rates over longer distances in the waveguide. The signal processing may comprise time domain equalization, spread spectrum or code division multiplexing or sectorized antenna selectivity. A further independent bus system is needed to connect the transceiver controller to user devices such as a personal computer, a telephone or any other peripheral device. The waveguide structure is primarily chosen to overcome radio interference problems in in-house communication.

In the EP 1 096 596 microwave waveguides and backplane systems for printed circuit boards (PCB) or multilayer boards (MLB) are disclosed. A backplane system is built by connecting the waveguide to an outer surface of the PCB or MLB or by arranging a waveguide layer in an inner portion of the MLB and mounting transmitters and receivers or transceivers, respectively, fixedly onto the waveguide. Both air-filled and nonradiative dielectric waveguides with rectangular cross sections are proposed. A suitable choice of transceivers are broadband microwave modems. An array of waveguides forming a backplane system is proposed for spatially multiplexing a plurality of independent data channels. However, the waveguides must be arranged with sufficient spacing to suppress cross-talk and thus need much space. The bandwidth limiting factor within each waveguide is mode conversion from a low order to the next higher order mode caused by discontinuities or irregularities along the waveguide.

Current computer designs comprise dedicated processors or components interconnected via conductors that are arranged on a printed circuit board (PCB) or multilayer board (MLB). Ordinary transmission lines on PCBs or MLBs are operated in the TEM mode. This mode always works as a low pass filter, with the effect that the attenuation and mode cross-coupling are increased for increasing frequencies. Conventional electrical bus-systems provide limited data rates of approximately 400 Mbps per line for conductor lines below 250 nm. Alternative point-to-point connections for high-speed signal transmission on PCBs or MLBs are matched lines, such as microstrip lines working in a quasi-TEM mode and coaxial-type conductors, or fiber-optic cables. A major disadvantage of electrical transmission lines in the TEM or quasi-TEM mode is the fact that it is impossible to achieve high data rates with frequency multiplexing over long distances. Bus-systems based on matched lines or fiber optics need exceptionally precise mechanical alignment, must be handled with great care and provide point-to-point connections only.

Rack-based modular computing systems for industrial and commercial applications and modern portable computers with docking stations are connected internally and to computing networks typically through conductor-based or wireless serial and parallel communication bus systems. The rack-based computing units have sockets for a simple mechanical mounting on rails that preferably conform with a DIN-standard (DIN-rail). The DIN-rails may be part of a self-supporting frame or may be fixed to a mounting plate.

Known topologies of communication buses are star, ring and bus structures. Star topologies are most commonly used for configuring communication systems, such as the public switched telephone network (PSTN) or high-speed bus systems. The star topology is easily implementable in fiber-optic networks and allows a proper termination of every transmission line without signal distortion. However, signal switching, signal synchronization and fault location are difficult in a star-coupled communication network. In ring topologies telegrams are stored and forwarded such that at most one telegram per segment is transmitted at a time. Thus, the data rate is reduced and the complexity of network management is increased. Bus-like topologies allow a parallel data access. Every participant receives the same data with a certain signal propagation delay. However, the parallel access requires an arbitration of the waveguide medium among the participants. This may be done by time multiplexing signals in a single waveguide or by space multiplexing signals in multiple waveguides connecting the participants in parallel. Fiber optic components provide the largest bandwidth presently available. However, bus-like fiber optic structures are very difficult to achieve with reasonable effort and it is costly and complex to provide multiple access in fiber optic buses.

### BRIEF SUMMARY OF THE INVENTION

It is a general object of the invention to provide a communication bus for transmitting microwave signals in a waveguide between digital data processing units, which bus is simple to install, space-saving and cost-efficient and allows to connect a plurality of bus participants in a highly flexible manner. This object is achieved according to the invention by the subject-matter as set forth in the independent claims.

In a first aspect the invention consists in a communication bus for transmitting microwave signals, comprising a microwave waveguide linking digital data processing units, wherein each processing unit is connectable to microwave transceiving means for coupling the microwave signals into and out of the waveguide, wherein further each transceiving means comprises a microwave modulator, a microwave demodulator and an antenna, that are in one piece with the respective processing unit, the waveguide has mounting means for mechanical mounting and coupling means for waveguide coupling of the processing units to the waveguide in a disconnectable manner, and the waveguide is part of a mounting rack for stacking and linking several processing units together to form a modular computing system. Transceiving means signify an emitter, receiver or transceiver for microwave signals. The microwave modulator and demodulator are attached to or integrated in the processing unit. Major advantages are achieved. The transceiving means do not belong to the waveguide, but rather each transceiving means is an integral part of its corresponding processing unit and forms a monolithic construction with the processing unit. An immediate and reversible microwave access of each processing unit to the waveguide is achieved through equipping the waveguide with combined mechanical mounting and microwave coupling means for the processing units. In this configuration only minimal alignment requirements of the processing units on the waveguide bus must be fulfilled. The waveguide is comprised or integrated in a rack for simultaneously carrying and interconnecting the units without cabling effort. Thus the units are simple to mount and demount on the waveguide without compromising the quality of radio communication through the waveguide, a flexible number of participants can be connected to the bus with ease, and the rack provides both a stack and a data link for the units. The mounting and coupling means may be adapted for receiving suitable mounting feet and a suitable microwave antenna of the processing units. The microwave waveguide bus is particularly useful for high data rate rack-based backplanes connecting digital processors, memories or similar digital equipment contained in the processing units.

In one embodiment the waveguide is integrated in the mounting rack and, in particular, is designed as the rack itself. This construction is very compact and simple. Preferably, the waveguide comprises microwave connections for linking several mounting racks together to form an extended or delocalized modular computing system. This allows to bridge large distances (e. g. up to several 100 m) between computing modules without compromising the calculating speed of the overall computing apparatus.

In other embodiments the waveguide is a general purpose waveguide with non-negligible attenuation, in particular above 2.5 dB/100 m, preferred 5 dB/100 m and most preferably above 10 dB/100 m; and/or the waveguide has general-purpose microwave-absorbing end caps. Such a waveguide is exceptionally cost-efficient because of increased manufacturing and assembling tolerances of waveguide components.

In yet another embodiment the mounting means are mounting rails that are fixedly connected to an outside, in particular on top, of the waveguide and that are designed for cooperating with mounting sockets attached to the processing units. Thus standard low-cost microwave waveguides and waveguide components may be chosen. Preferably, the mounting rails are standard DIN-rails and the mounting sockets are standard DIN-sockets. Avoiding costly components, such as high-performance waveguide rails or end-caps, further simplifies the construction and reduces the cost of the communication bus.

The embodiment according to claim 5 has the advantage that the mounting and coupling means on the waveguide cooperate favourably with the processing units and independently from a specific microwave antenna design.

The embodiments according to claim 6 implicate a further improved flexibility of bus design and a simplified handling of bus components.

The embodiments according to claim 7 have the advantage that (i) the antenna mismatch leaves sufficient energy in the microwave for parallel access capability, and/or that (ii) a single antenna or a small number of antennas per processing unit provides a very much simplified interface of the processing units compared to conventional multi-pin electrical connectors.

In a further embodiment each transceiving means comprises means for converting digital data signals into broadband-modulated microwave signals and vice versa, and the communication bus comprises frequency multiplexing means for providing frequency-encoded microwave signals and for defining independent communication channels within the microwave waveguide. The transceiving means shall comprise an analogue-to-digital converter and RF modulation means for generating and demodulating high frequency or broadband microwave signals that are very suitable for frequency multiplexing. Frequency multiplexing on a waveguide requires that all frequencies must be chosen above the cut-off frequency of the fundamental waveguide mode and may be chosen within the frequency band of the same mode or different modes. The waveguide dimensions can be chosen according to the desired range of transmission frequencies and the available space.

Frequency multiplexing a plurality of microwave signals on the rack-based waveguide is a powerful tool to provide different communication channels with parallel access on the common physical waveguide medium. In particular, large bandwidths and a multitude of independent data channels can be achieved. Thus many communication participants are linked together over the waveguide bus and can be addressed and recognized selectively. Furthermore, frequency multiplexing provides a great flexibility in arbitrating the frequency channels and their bandwidth capacity among various communication partners. A frequency-multiplexed communication bus can be operated with sufficient bandwidth even when mode conversion is occurring in the waveguide. Frequency multiplexing is superior to time domain multiplexing because less stringent requirements with respect to attenuation and reflections must be fulfilled by the waveguide. As well, frequency multiplexing is superior to space multiplexing because space requirements do not limit the achievable bandwidth capacity.

In another embodiment the communication bus is designed for computer-internal high-speed data traffic such that the microwave signals transmit computer-internal data between the digital processing units. The increased complexity in data conditioning for microwave transmission, such as digital-to-analogue and baseband-to-broadband data conversion, is by far outweighed by the gain in bandwidth capacity and the multiplexability of many microwave channels on the communication bus.

In another embodiment the frequency multiplexing means comprise hardware and/or software means for global frequency management on the communication bus. Thus frequency planning or frequency network management can be performed globally for the whole communication bus. The hardware and/or software means may be implemented locally or delocalized and may perform the bus frequency control in a centralized or self-adapting decentralized manner. The previous wiring complexity within modular computing systems can be removed and replaces by specific electronics and/or programming tools designed for controlling the data traffic and in particular the frequency management on the communication bus.

In another embodiment the frequency multiplexing means comprise means for allocating specific frequencies to specific microwave signals and/or to specific transmitting and/or receiving processing units and/or to specific groups of transmitting and receiving processing units. In other words, frequencies may be defined to specify signals and/or communication partners, such as pairs or groups of processing units. Preferably, frequencies, i. e. frequency channels with certain bandwidths, can be defined and allocated dynamically based on a priori known, anticipated or currently determined communication requirements on the waveguide bus. The adaptive frequency allocation further improves the rack-based microwave bus performance.

The embodiment according to claim 10b has the advantage that the signal transmission capacity of the waveguide can be fully exploited without compromising bandwidth needs of individual communication channels. Such bandwidth needs depend on limitations of the signal generating device, such as an access speed, e. g. of a random access memory (RAM), or of the signal processing device. They may as well depend on the type of transmitted signal.

The embodiment according to claim 11 has the advantage that various types of digital data processing equipment, such as processors, memories and/or peripheral devices can be linked together via high-data-rate inter-unit or intra-computer microwave waveguides. Such equipment may even be located in distant racks (up to km) that are connected via microwave waveguides. The inter-unit waveguide may be designed as or be part of a system area network (SAN).

The embodiments according to claim 12 have the advantage that the rack-based waveguide may be part of a hierarchy or cascade of waveguides and, if desired, a direct coupling of microwave signals between waveguides in different layers are feasible.

The embodiments according to claim 13 have the advantage that a simplified power and heat management of processing units connected to the waveguide bus is achieved.

In a second aspect the invention relates to a modular computing system comprising a communication bus as described above.

### BRIEF DESCRIPTION OF THE DRAWINGS

The features and advantages of the invention will be better understood and objects other than those set forth above will become apparent when consideration is given to the following detailed description thereof. Such description makes reference to the annexed drawings, which are schematically showing in
- Fig. 1a: a current computer design with a conventional bus system;
- Fig. 1b: a conventional parallel bus system having a plu- rality of parallel wires;
- Fig. 2: a conventional rack design for mounting computing equipment (side view);
- Fig. 3a, 3b: a novel computer design comprising a rack- based microwave communication bus according to invention (side view and top view);
- Fig. 4: a microwave frequency multiplexing operation ac- cording to a preferred embodiment;
- Fig. 5: a novel computer design with a hierarchical mi- crowave communication bus comprising multiple waveguiding layers;
- Fig. 6a: a side view of a digital equipment unit with rack-based waveguide for high speed transmission;
- Fig. 6b: a perspective view of several digital equipment units mounted on a rack-based backplane with mi- crowave waveguides;

In the drawings identical parts are designated by identical reference numerals.

### DETAILED DESCRIPTION OF THE INVENTION

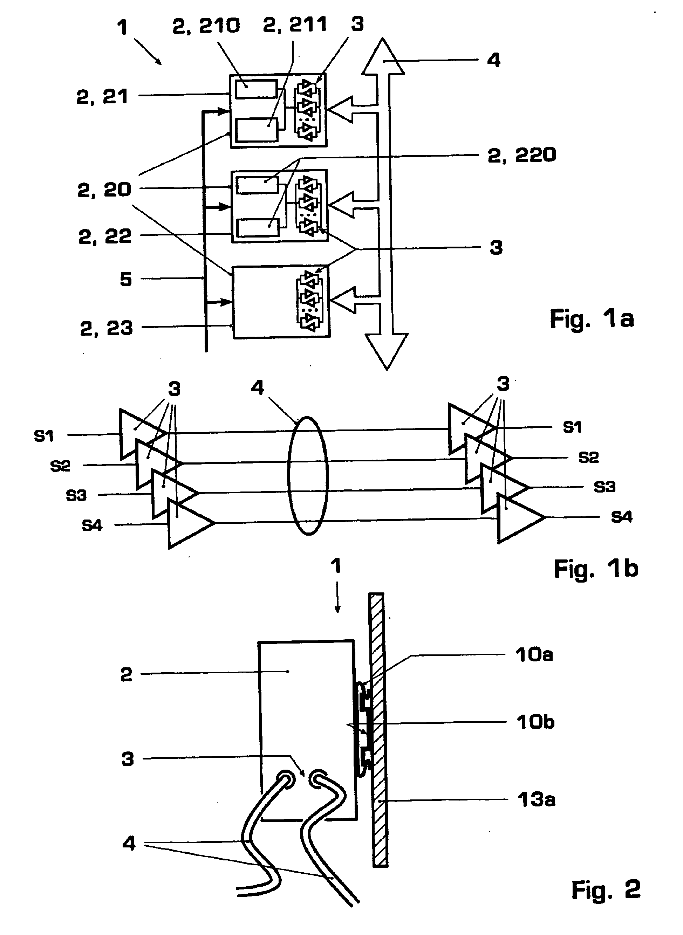

Fig. 1a displays a general form of current computer systems 1. The modular computer 1 comprises digital data processing units 2, such as subassemblies or cards 20, in particular a processor, microprocessor or central processing unit (CPU) 21, comprising e. g. an arithmetic logic unit (ALU) 210 and a cash memory 211, a memory module 22, comprising e. g. a RAM-chip 220, and a peripheral device 23, such as an input/output device 23 and in particular a keyboard, mouse, network interface, graphic interface, drive, storage device or other component 23. The processing units 2 are supplied with power via separate supply lines 5. The data traffic is handled over a conventional bus 4 that is accessed by the processing units 2 via conventional input/output buffers or bus drivers 3. The drivers 3 condition digital signals as baseband signals and perform the necessary impedance matching for signal coupling to the multiple-conductor bus 4.

Fig. 1b shows a conventional bus 4 which is typically formed by a plurality of conductor lines or microstrip lines each transmitting one signal S1, ..., S4 in parallel. The data rate between the dedicated components 2 over conventional conductor lines 4 is limited to about 400 Mbps per line for a line width below 250 nm.

Fig. 2 shows a conventional rack design for mounting usual computing units 2 that are networked together via a conventional bus driver 3 and a conventional wire-based communication bus 4. The units 2 are typically mounted via sockets 10a on a rail 10b, e. g. a DIN-rail 10b, attached to a mounting plate 13a.

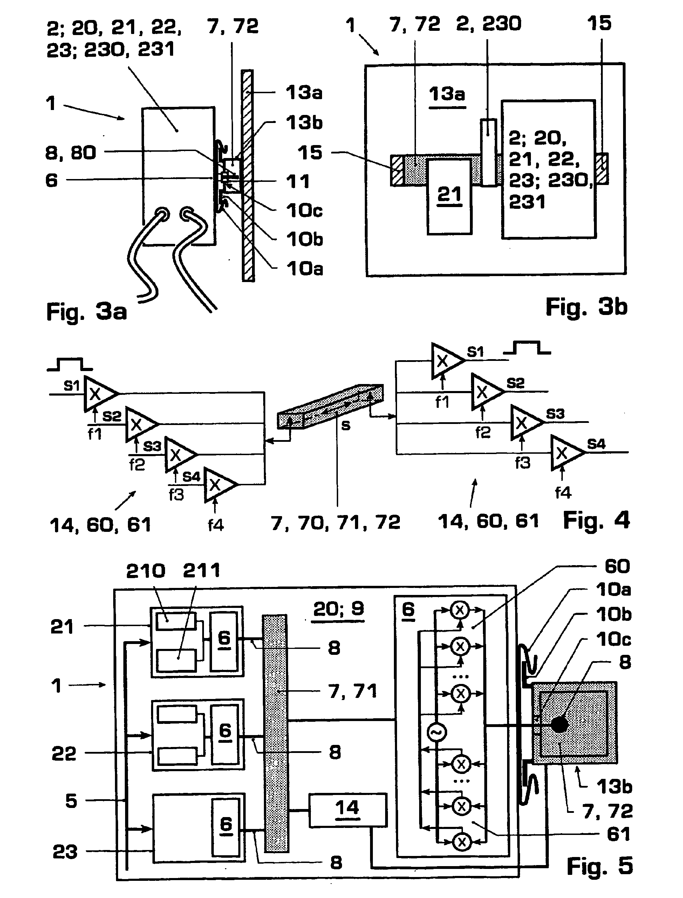

Fig. 3a and Fig. 3b show a novel computer design 1 wherein the conventional bus 4 is replaced by one or several microwave waveguides 7; 72. The computing equipment or processing units 2 can be, e. g., sub-assemblies 20, cards 20, processors 21, memory modules 22, modules 21, 22, 23 comprised on a common board 9, such as processing and/or memory modules 21, 22 on a printed circuit board 9, multilayer board 9 or computer mother board 9, and/or peripheral devices 23, such as input/output (I/O) devices 23, Ethernet cards 230, compact disc drives (CD-drives) 231, storage devices and the like. The processing units 2; 20, 21, 22, 23; 230, 231 are equipped with microwave transceiving means 6, such as emitter, receiver or transceiver 6, for transforming digital signals into radio or microwave signals that are then coupled via antenna 8 to the rack-based waveguide 72 for rapid transmission. The transceiver 6 comprises a microwave modulator 60, demodulator 61 and internal signaling lines 62 (Fig. 5). The microwave antenna 8 can as well receive microwave signals from other processing units 2 and deliver them via the microwave demodulator 6 to its processing unit 2. According to invention, the transceiving means 6 including the modulator 60, demodulator 61 and antenna 8, are constructed or packaged in one piece or monolithically with the units 2; 20, 21, 22, 23; 230, 231, the waveguide 7; 72 is equipped with mounting means 10b for mechanical mounting and coupling means 10c for microwave coupling of the units 2; 20, 21, 22, 23; 230, 231 to the waveguide 7; 72 in a disconnectable manner, and the waveguide 7; 72 is part of a mounting rack 13b for stacking and linking several processing units 2 together to form a modular computing system 1. Consequently, the processing units 2 are reversibly mountable on and their antennas 8 are reversibly connectable to the rack-waveguide 72. Note that each processing unit is a separate entity and preferably has a separate housing and is thus separately mountable and connectable.

The rack-based waveguide constitutes an intra-computer microwave waveguide bus 72 that eliminates all cabling efforts. Preferably, the rack 13b and waveguide 72 are integrated into a unitary element. The waveguide 72 can be constructed sturdily enough to function as the rack itself. The rack-waveguide 13b, 72 can have an arbitrary shape, can comprise bends or curves, and it can e. g. be a frame with insertion sockets or rails 10b for the units 2. Several rack-based waveguides 72 can be linked together by microwave waveguide connections in extended computing systems 1. Advantageously, the waveguide 72 and connections are general purpose waveguides with non-negligible attenuation and, in particular comprises low-cost waveguide components, such as general-purpose microwave rails and microwave-absorbing end caps 15. Favourably, the microwave waveguide 7 is a hollow metallic or nonradiative dielectric waveguide transmitting at least one TE- and/or TM-mode and has, in particular, a rectangular, round or coaxial cross section. The dimensions of the waveguide 7, in particular the width a and height b of a rectangular hollow waveguide 7, are chosen such that the desired cut-off frequency and the admissible size of the rack-based waveguide 72 are achieved. If the waveguide 7 is filled with a dielectric other than air and with a low loss angle the antenna design 8 shall be adapted accordingly.

As shown in Fig. 3a, the mounting means 10b are preferably DIN-rails 10b attached to the top of the waveguide 72. The DIN-rails 10b cooperate with DIN-sockets 10a attached to the units or a unit housing 2; 20, 21, 22, 23; 230, 231. The coupling means 10c shall be a slot 10c or connection designed such that a tight microwave coupling of the antenna 8 to the waveguide 72 is achieved simultaneously when a mounting socket 10a of the processing unit 2 is engaged with the mounting means 10b. The mounting and coupling means 10b, 10c may be provided at discrete or continuously distributed locations along the waveguide 72 thus allowing for a multi-point or continuous parallel access to the waveguide bus. Pluggable or slidable mounting sockets 10a are easy to handle.

The antenna 8 may comprise a microstrip-to-waveguide transition or an aperture-coupled transition and may have a horn-like or stick-like design. As shown in Fig. 3a, a stick antenna 8 is extending outwardly from the processing unit 2 and is extending, in a mounted state, into the rack-based waveguide 72.

Fig. 4 shows an embodiment of a frequency multiplexing operation of the waveguide bus 7; 72, 71, 70. In the microwave oscillator or modulator 60 shown on the left the microwave signals S1, ... S4 are modulated onto high frequency carrier signals denoted by f1, ... f4, are added and coupled to the waveguide 7; 72, 71, 70. The reverse process is performed on the receiver side by the microwave demodulator 61. Obviously the waveguide 7 is operable in both transmission directions by equipping both sides with a modulator 60 and receiver 61.

The data traffic on the waveguide bus 7 is managed by microwave signal management means 17 (Fig. 5) that preferably comprise frequency multiplexing means 6, 17. The means 17 may be implemented in a separate network management unit 17 or may be integrated in a processing unit 2; 20, 21, 22, 23; 230, 231. These means 17 may be implemented using programmable software tools.

The frequency multiplexing means 6, 17 allow to define independent communication channels within the same microwave waveguide 7. In particular, specific frequencies are allocated to specific signals S1, ... S4 and/or to specific transmitting and/or receiving processing units 2 and/or to specific groups of transmitting and receiving processing units 2. Preferably the frequency multiplexing means 6, 17 comprise means for dynamic bandwidth allocation to individual communication channels as a function of a type of signal S1, ... S4 or a type of processing unit 2 associated with the communication channel. In particular, large bandwidths, preferably above 100 MHz, are allocated to fast address-data signals and small bandwidths, preferably below 100 MHz, more preferred below 1 MHz, are allocated to rather slow general-purpose signals, such as input/output signals or interrupt signals. The dynamic adaptation of bandwidth allocation allows an efficient bandwidth usage on the waveguide and a continuous or at least repeated matching of channel bandwidths to the actual bandwidth needs. If bandwidth is no longer needed additional frequency channels may be opened in intermediate frequency bands or existing frequency bands may be shifted to free frequency space.

The microwave bus allows transmission speeds of approximately 100 Gbps per waveguide and can bridge even very long distances, such as 100 m or more. Thus signal broadcast and very accurate synchronization is possible over considerable distances, and even the system synchronization clock can be sent via the waveguide bus 7 for synchronizing the complete delocalized computer system 1.

The absence of electromagnetic perturbations in the waveguide 7 allows to achieve high data rates without complicated signal conditioning. For example, by using a 64 QAM (quadrature amplitude modulation) a spectral density of 64 bits/Hz can be reached and a bit rate of 64 Gbps can be transmitted in a stable spectral range of 1 GHz.

Fig. 5 shows a communication bus comprising a multi-layered hierarchy or cascade of waveguides 7; 72, 71, 70 comprising the rack-based waveguide 72 linking the processing units 2 among each other and intra-unit waveguides 71, 70 connecting IC-chips 21, 210, 211; 22, 220 on a board 9, thus forming a board area network (BAN), or connecting IC-chips 210, 211, 220 inside a processing or memory module 20, 21, 22, 23, thus forming a module area network (MAN). The BAN or MAN is interfaced itself via a microwave modem 60, 61 and antenna 8 to the rack-based inter-unit waveguide 72, the structure and operation of which has been explained in connection with Fig. 3a and Fig. 3b. The waveguide cascade 7; 72, 71, 70 may comprise, in particular, direct waveguide links to transmit microwave signals S1, ... S4 immediately, i. e. without interposed microwave modems 60, 61, between different waveguide layers 72, 71; 72, 70; 71, 70.

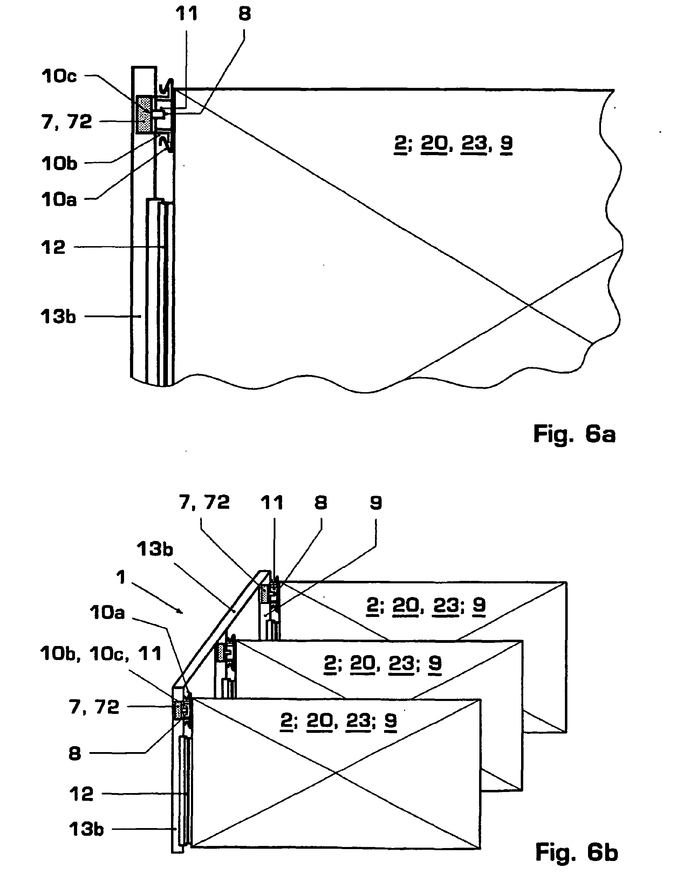

Fig. 6a shows a rack-based microwave waveguide 7; 72 as discussed above adapted for a processing unit 2 or a board 9, such as a PCB or MLB 9. The unit 2 or board 9 has the above described microwave interface 8, 11, 10a comprising a waveguide connector 11 with at least one antenna 8 and the mounting socket 10a. In addition, the unit 2 or board 9 can be interfaced in the rack 13b with a conventional N-pole connector 12. As well, the unit 2 or board 9 may itself comprise an intra-unit waveguide bus 71 (not shown) which may be coupled directly to the rack-based waveguide 72. Note that in this case the antenna 8 is simply a waveguide connection or transition element 8 and the modulator 60 and demodulator 61 are arranged inside the unit 2 or board 9. Again the mounting socket 10a is cooperating with the mounting and coupling means 10b, 10c to provide a reliable mechanical and waveguide connection. The waveguide 72 provides the desired high-speed communication.

Fig. 6b shows a parallel arrangement of several units 2 or boards 9, as in Fig. 6a, on a frame-like, preferably self-supporting rack 13b. The rack 13b provides mechanical coupling slots 10c for the units 2 or boards 9 and simultaneously serves as a housing for the interconnected microwave waveguides 72. The rack-based waveguide 72 may comprise a plurality of rack-based microwave waveguides 72, preferably interconnected with each other and/or arranged as a backplane on the rack 13b. Such a network of interconnected waveguides 72 can be part of or form a system area network (SAN). Thus an extended rack-based waveguide backplane 72 for linking units 2 or boards 9 is provided that is well suited for modular industrial computing systems 1. Typical applications are computers 1 for control technology, such as machine, plant, substation or utility control and steering and other purposes.

A prominent advantage of the novel microwave interface is the elimination of a bunch of external connectors typically present in conventional computers 1. In particular, the frequency-multiplexing of multiple channels on the common waveguide bus 7 is done much simpler by implementing appropriate communication bus software tools for network management. All processing units 2 sharing the same waveguide 70 can receive the same signals S1, ... S4 within the physical limitations of the bus 7, such as signal dispersion and multi-path radio reception. It is very favourable that the microwave interfaces between the units 2 and the rack-based waveguide 72 are not expensive optical connectors but rather simple metallic sticks or tubes representing antennas 8. Consequently, cleanliness and mounting precision of the microwave interface 8 are completely uncritical in the rack-based waveguide approach.

Preferably the communication bus 7 comprises means for microwave power supply (not shown) through the waveguide 7 to the processing units 2 and the processing units 2 comprise antennas 8, 80 for extracting a suitable portion of the microwave power. The signal-transceiving antenna 8 and the power-receiving antenna 80 can be physically separated, wherein the signal antenna 8 shall be mismatched to all frequencies, in particular to the power transmission frequency, and the power antenna 80 shall be matched to the power transmission frequency. Alternatively the signal and power antenna 8, 80 can be combined in one antenna 8 which shall be mismatched to frequencies of information signals S1, ... S4 and matched to the frequency of the power signal. Preferably thermal cooling means (not shown) for the processing units 2 comprise the waveguide 7 as a heat transmission medium and/or as a heat sink. In particular, the waveguide 7 is metallic and is thermally connected to the units 2 and to an appended heat sink (not shown).

In a second aspect the invention relates to a modular computing system 1 comprising a communication bus with a microwave waveguide 7; 72 for linking digital data processing units 2 as disclosed above. In particular, the processing units 2 are or comprise sub-assemblies 20, cards 20, modules 21, 22, 23 comprised on a common board 9 and/or peripheral devices 23; and/or the computing system 1 is a personal or commercial computing system 1, such as portable computers 1 using docking stations and exchangeable devices, or a laboratory or industrial computing system 1, in particular for control technology, such as machine, plant, substation or utility control and steering; and/or the waveguide 7; 72 is or is part of a system area network (SAN).

The invention combines the advantages of a fiber optical system, i. e. high bandwidth, perfect privacy and immunity to and zero-emission of electromagnetic interference, with those of a conventional conductor-based system, i. e. ease of manufacturing and handling and low cost, and goes beyond both schemes by providing a truly parallel access to the rack-based waveguide communication bus 72.

While there are shown and described and pointed out the fundamental novel features of the invention as applied to the preferred embodiments, it will be understood that various omissions and substitutions and changes of the form and details of the device illustrated and in its operation may be made by those skilled in the art within the scope and range of equivalents of the claims.

### List of Reference Symbols

- 1: computer, information processing system
- 2: digital data processing unit
- 20: sub-assembly, card
- 21: processor, microprocessor (µP), central process- ing unit (CPU), multi-chip module
- 210: arithmetic logic unit (ALU), IC-chip
- 211: cash memory, IC-chip
- 22: memory module, multi-chip module
- 220: RAM-chip, IC-chip
- 23: peripheral device, input/output device (I/O)
- 230: Ethernet card
- 231: compact disc drive (CD-drive)
- 3: input/output buffer, conventional bus driver
- 4: conventional bus
- 5: power supply lines
- 6: waveguide bus interface, transceiving means; transmitter, receiver; transceiver
- 60: microwave oscillator, modulator
- 61: microwave demodulator
- 62: internal signaling line
- 7: microwave waveguide, communication bus
- 70: intra-module microwave waveguide
- 71: on-board microwave waveguide
- 72: inter-unit or intra-computer microwave waveguide, rack-based waveguide
- 8: antenna, microwave signal antenna
- 80: microwave power supply antenna
- 9: mounting board, printed circuit board (PCB), multi layer board (MLB); multi-chip module
- 10a: mounting socket, DIN-socket
- 10b: mounting means, mounting rail, DIN-rail
- 10c: coupling means, slots
- 11: waveguide connector
- 12: N-pole connector
- 13a: mounting plate, mechanical fixation
- 13b: mounting frame, rack with integrated waveguide, rack backplane
- 14: microwave signal management means, multiplexing means, frequency multiplexing means

- S1-S4: signals
- f1-f4: frequency channels, carrier signals
- X: multiplier
- f1*S1: frequency-modulated signal
- S: compound signal, frequency-multiplexed signal

## Claims

1. A communication bus for transmitting microwave signals (S1, ..., S4), comprising a microwave waveguide (7; 72) linking digital data processing units (2), wherein each processing unit (2) is connectable to microwave transceiving means (6) for coupling the microwave signals (S1, ..., S4) into and out of the waveguide (7; 72); wherein
a) each transceiving means (6) comprises a microwave modulator (60), a microwave demodulator (61) and an antenna (8), that are in one piece with the respective processing unit (2), and
b) the waveguide (7; 72) has mounting means (10b) for mechanical mounting and coupling means (10c) for microwave coupling of the processing units (2) to the waveguide (7; 72) in a disconnectable manner, **characterized in that**
c) the waveguide (7; 72) is part of a mounting rack (13b) for stacking and linking several processing units (2) together to form a modular computing system (1).

2. The communication bus according to claim 1, **characterized in that**
a) the waveguide (7; 72) is integrated in the mounting rack (13b) and, in particular, is designed as the rack (13b) itself and
b) in particular that the waveguide (7; 72) comprises microwave connections for linking several mounting racks (13b) together to form an extended modular computing system (1).

3. The communication bus according to any of the preceding claims, **characterized in that**
a) the waveguide (7; 72) is a general purpose waveguide with non-negligible attenuation, in particular above 2.5 dB/100 m, preferred 5 dB/100 m and most preferably above 10 dB/100 m, and/or
b) the waveguide (7; 72) has general-purpose microwave-absorbing end caps (15) and/or
c) the waveguide (7; 72) is a hollow metallic or nonradiative dielectric waveguide (7; 72) transmitting at least one TE- and/or TM-mode and has, in particular, a rectangular, round or coaxial cross section.

4. The communication bus according to any of the preceding claims, **characterized in that**
a) the mounting means (10b) are mounting rails (10b) that are fixedly connected to an outside, in particular on top, of the waveguide (7; 72) and that are designed for cooperating with mounting sockets (10a) attached to the processing units (2) and
b) in particular that the mounting rails (10b) are standard DIN-rails and the mounting sockets (10a) are standard DIN-sockets.

5. The communication bus according to any of the preceding claims, **characterized in that** the coupling means (10c) is a slot (10c) or connection designed such that a tight microwave coupling of the antenna (8) to the waveguide (7; 72) is achieved simultaneously when a mounting socket (10a) of the processing unit (2) is engaged with the mounting means (10b).

6. The communication bus according to any of the preceding claims, **characterized in that**
a) the mounting and coupling means (10b, 10c) are provided at discrete or continuously distributed locations along the waveguide (7; 72) and/or
b) a mounting socket or sockets (10a) of the processing unit (2) is or are slidable or pluggable onto the mounting means (10b).

7. The communication bus according to any of the preceding claims, **characterized in that**
a) the antenna (8) is mismatched for extracting only a small portion of microwave signal energy conducted in the waveguide (7; 70, 71, 72) and/or
b) one antenna (8) or few antennas (8) per processing unit (2) are present.

8. The communication bus according to any of the preceding claims, **characterized in that**
a) each transceiving means (6) comprises means for converting digital data signals into broadband-modulated microwave signals (S1, ..., S4) and vice versa and
b) the communication bus comprises frequency multiplexing means (6, 17) for providing frequency-encoded microwave signals (S1, ..., S4; S) and for defining independent communication channels within the microwave waveguide (7; 72).

9. The communication bus according to any of the preceding claims, **characterized in that**
a) the communication bus is designed for computer-internal high-speed data traffic such that the microwave signals (S1, ..., S4; S) transmit computer-internal data between the digital processing units (2) and/or
b) frequency multiplexing means (6, 17) comprise hardware and/or software means for global frequency management on the communication bus.

10. The communication bus according to any of the preceding claims, **characterized in that**
a) frequency multiplexing means (6, 17) comprise means for allocating specific frequencies (f1, ... f4) to specific microwave signals (S1, ..., S4) and/or to specific transmitting and/or receiving processing units (2) and/or to specific groups of transmitting and receiving processing units (2) and/or
b) frequency multiplexing means (6, 17) comprise means for dynamic bandwidth allocation to individual communication channels as a function of a type of microwave signal (S1, ..., S4) or processing unit (2) associated with the communication channel.

11. The communication bus according to any of the preceding claims, **characterized in that**
a) the processing units (2) are or comprise subassemblies (20), cards (20), modules (21, 22, 23) comprised on a common board (9), such as processing and/or memory modules (21, 22) on a printed circuit board (9), multilayer board (9) or computer mother board (9), and/or peripheral devices (23), such as input/output devices (23), drives (231) or storage devices and/or
b) the communication bus comprises a plurality of microwave waveguides (7; 72), preferably interconnected with each other and/or arranged as a backplane on the rack (13b).

12. The communication bus according to any of the preceding claims, **characterized in that**
a) the communication bus comprises a multi-layered hierarchy of waveguides (7; 72, 71, 70) comprising the rack-based waveguide (7; 72) linking the processing units (2) among each other and intra-unit waveguides (71, 70) connecting IC-chips (21, 210, 211; 22, 220) on a board (9) or connecting IC-chips (210, 211, 220) inside a processing or memory module (20, 21, 22, 23) and
b) in particular that direct waveguide links are provided to transmit microwave signals (S1, ..., S4) between different waveguide layers (70, 71, 72).

13. The communication bus according to any of the preceding claims, **characterized in that**
a) the communication bus comprises means for microwave power supply through the waveguide (7; 72) to the processing units (2) and the processing units (2) comprise antennas (80; 8) for extracting a suitable portion of the microwave power and/or
b) thermal cooling means for the processing units (2) comprise the waveguide (7; 72) as a heat transmission medium and/or as a heat sink.

14. A modular computing system (1) comprising a communication bus with a microwave waveguide (7; 72) for linking digital data processing units (2) according to any of the preceding claims.

15. The modular computing system (1) according to claim 14, **characterized in that**
a) the processing units (2) are or comprise subassemblies (20), cards (20), modules (21, 22, 23) comprised on a common board (9) and/or peripheral devices (23) and/or
b) the computing system (1) is a personal or commercial computing system (1) or a laboratory or industrial computing system (1), in particular for control technology, such as machine, plant, substation or utility control and steering, and/or
c) the waveguide (7; 72) is or is part of a system area network.

## Patentansprüche

1. Kommunikationsbus zum Übertragen von Mikrowellensignalen (S1, ..., S4) mit einem Mikrowellen-Wellenleiter (7; 72), der digitale Datenverarbeitungseinheiten (2) verbindet, wobei jede Verarbeitungseinheit (2) mit Mikrowellen-Sende-/Empfangs-Mitteln (6) zum Ein- und Auskoppeln der Mikrowellensignale (S1, ..., S4) in und aus dem Wellenleiter (7; 72) verbunden ist, wobei
a) jedes Sende-/Empfangsmittel (6) einen Mikrowellenmodulator (60) und einen Mikrowellendemodulator (61) und eine Antenne (8) umfasst, die in einem Stück mit der jeweiligen Verarbeitungseinheit (2) sind, und
b) der Wellenleiter (7; 72) Anbringmittel (10b) zum mechanischen Anbringen und Koppelmittel (10c) zur Mikrowellenkopplung der Verarbeitungseinheiten (2) mit dem Wellenleiter (7; 72) auf eine trennbare Weise aufweist und
**dadurch gekennzeichnet, dass**
c) der Wellenleiter (7; 72) Teil eines Anbringgestells (13b) zum Stapeln und Verbinden mehrerer Verarbeitungseinheiten (2) miteinander zur Bildung eines modularen Datenverarbeitungssystems (1) ist.

2. Kommunikationsbus nach Anspruch 1, **dadurch gekennzeichnet, dass**
a) der Wellenleiter (7; 72) in das Anbringgestell (13b) integriert ist und insbesondere als das Gestell (13b) selbst ausgelegt ist und
b) insbesondere der Wellenleiter (7; 72) Mikrowellenverbindungen zum Verbinden mehrerer Anbringgestelle (13b) miteinander zur Bildung eines erweiterten modularen Datenverarbeitungssystems (1) umfasst.

3. Kommunikationsbus nach einem der vorhergehenden Ansprüche, **dadurch gekennzeichnet, dass**
a) der Wellenleiter (7; 72) ein Vielzweck-Wellenleiter mit nicht vernachlässigbarer Dämpfung, insbesondere über 2,5 dB/100 m, bevorzugt 5 dB/100 m und ganz besonders bevorzugt über 10 dB/100 m ist, und/oder
b) der Wellenleiter (7; 72) Vielzweck-Mikrowellen-Absorptionsendkappen (15) aufweist und/oder
c) der Wellenleiter (7; 72) ein hohler metallischer oder nichtstrahlender dielektrischer Wellenleiter (7; 72) ist, der mindestens eine TE- und/oder TM-Mode überträgt und insbesondere einen rechteckigen, runden oder coaxialen Querschnitt aufweist.

4. Kommunikationsbus nach einem der vorhergehenden Ansprüche, **dadurch gekennzeichnet, dass**
a) die Anbringmittel (10b) Anbringschienen (10b) sind, die fixiert mit einer Außenseite des Wellenleiters (7; 72) und insbesondere über diesem verbunden sind und die für Kooperation mit an den Verarbeitungseinheiten (2) angebrachten Anbringsockeln (10a) ausgelegt sind und
b) insbesondere die Anbringschienen (10b) Standard-DIN-Schienen und die Anbringsockel (10a) Standard-DIN-Sockel sind.

5. Kommunikationsbus nach einem der vorhergehenden Ansprüche, **dadurch gekennzeichnet, dass** das Koppelmittel (10c) ein Schlitz (10c) oder eine Verbindung ist, der bzw. die so ausgelegt ist, dass gleichzeitig eine enge Mikrowellenkopplung der Antenne (8) mit dem Wellenleiter (7; 72) erzielt wird, wenn sich ein Anbringsockel (10a) der Verarbeitungseinheit (2) mit den Anbringmitteln (10b) in Eingriff befindet.

6. Kommunikationsbus nach einem der vorhergehenden Ansprüche, **dadurch gekennzeichnet, dass**
a) die Anbring- und Koppelmittel (10b, 10c) an diskreten oder kontinuierlich verteilten Stellen entlang dem Wellenleiter (7; 72) vorgesehen sind und/oder
b) ein Anbringsockel oder mehrere Sockel (10a) der Verarbeitungseinheit (2) auf die Anbringmittel (10b) aufschiebbar oder aufsteckbar ist bzw. sind.

7. Kommunikationsbus nach einem der vorhergehenden Ansprüche, **dadurch gekennzeichnet, dass**
a) die Antenne (8) fehlangepasst ist, um nur einen kleinen Teil der in dem Wellenleiter (7; 70, 71, 72) geleiteten Mikrowellensignalenergie zu extrahieren und/oder
b) eine Antenne (8) oder einige wenige Antennen (8) pro Verarbeitungseinheit (2) vorliegen.

8. Kommunikationsbus nach einem der vorhergehenden Ansprüche, **dadurch gekennzeichnet, dass**
a) jedes Sende-/Empfangsmittel (6) Mittel zum Umsetzen von digitalen Datensignalen in breitbandmodulierte Mikrowellensignale (S1, ..., S4) und umgekehrt umfasst und
b) der Kommunikationsbus Frequenzmultiplexermittel (6, 17) zum Bereitstellen von frequenzcodierten Mikrowellensignalen (S1, ..., S4; S) und zum Definieren von unabhängigen Kommunikationskanälen in dem Mikrowellen-Wellenleiter (7; 72) umfasst.

9. Kommunikationsbus nach einem der vorhergehenden Ansprüche, **dadurch gekennzeichnet, dass**
a) der Kommunikationsbus für computerinternen schnellen Datenverkehr ausgelegt ist, dergestalt, dass die Mikrowellensignale (S1, ..., S4; S) computerinterne Daten zwischen den digitalen Verarbeitungseinheiten (2) übertragen, und/oder
b) die Frequenzmultiplexermittel (6, 17) Hardware-und/oder Softwaremittel zur globalen Frequenzverwaltung auf dem Kommunikationsbus umfassen.

10. Kommunikationsbus nach einem der vorhergehenden Ansprüche, **dadurch gekennzeichnet, dass**
a) die Frequenzmultiplexermittel (6, 17) Mittel zum Vergeben von spezifischen Frequenzen (f1, ..., f4) an spezifische Mikrowellensignale (S1, ..., S4) und/oder an spezifische Sende- und/oder Empfangsverarbeitungseinheiten (2) und/oder an spezifische Gruppen von Sende- und Empfangsverarbeitungseinheiten (2) umfassen und/oder
b) die Frequenzmultiplexermittel (6, 17) Mittel zur dynamischen Bandbreitenvergabe an individuelle Kommunikationskanäle als Funktion einer Art von Mikrowellensignal (S1, ..., S4) oder Verarbeitungseinheit (2), die mit dem Kommunikationskanal assoziiert ist, umfassen.

11. Kommunikationsbus nach einem der vorhergehenden Ansprüche, **dadurch gekennzeichnet, dass**
a) die Verarbeitungseinheiten (2) Folgendes sind oder umfassen: Baugruppen (20), Karten (20), Module (21, 22, 23), die auf einem gemeinsamen Board (9) beinhaltet sind, wie zum Beispiel Verarbeitungs- und/oder Speichermodule (21, 22) auf einer Leiterplatte (9), ein mehrschichtiges Board (9) oder Computer-Motherboard (9) und/oder Peripheriegeräte (23), wie zum Beispiel Eingabe-/Ausgabeeinrichtungen (23), Laufwerke (231) oder Speichereinrichtungen und/oder
b) der Kommunikationsbus mehrere Mikrowellen-Wellenleiter (7; 72) umfasst, die vorzugsweise miteinander verbunden und/oder als Backplane auf dem Gestell (13b) angeordnet sind.

12. Kommunikationsbus nach einem der vorhergehenden Ansprüche, **dadurch gekennzeichnet, dass**
a) der Kommunikationsbus eine mehrschichtige Hierarchie von Wellenleitern (7; 72, 71, 70) umfasst, umfassend den Wellenleiter (7; 72) auf Gestellbasis, der die Verarbeitungseinheiten (2) untereinander verbindet, und einheitsinterne Wellenleiter (71, 70), die IC-Chips (21, 210, 211; 22, 220) auf einem Board (9) verbinden oder IC-Chips (210, 211, 220) in einem Verarbeitungs- oder Speichermodul (20, 21, 22, 23) verbinden, und
b) insbesondere direkte Wellenleiterverbindungen vorgesehen sind, um Mikrowellensignale (S1, ..., S4) zwischen verschiedenen Wellenleiterschichten (70, 71, 72) zu übertragen.

13. Kommunikationsbus nach einem der vorhergehenden Ansprüche, **dadurch gekennzeichnet, dass**
a) der Kommunikationsbus Mittel zur Mikrowellen-Stromversorgung durch den Wellenleiter (7; 72) für die Verarbeitungseinheiten (2) umfasst und die Verarbeitungseinheiten (2) Antennen (80; 8) zum Extrahieren eines geeigneten Teils der Mikrowellenleistung umfassen und/oder
b) thermische Kühlmittel für die Verarbeitungseinheiten (2) den Wellenleiter (7; 72) als ein Wärmeleitmedium und/oder als einen Kühlkörper umfassen.

14. Modulares Datenverarbeitungssystem (1), das einen Kommunikationsbus mit einem Mikrowellen-Wellenleiter (7; 72) zum Verbinden von digitalen Datenverarbeitungseinheiten (2) nach einem der vorhergehenden Ansprüche umfasst.

15. Modulares Datenverarbeitungssystem (1) nach Anspruch 14, **dadurch gekennzeichnet, dass**
a) die Verarbeitungseinheiten (2) Folgendes sind oder umfassen: Baugruppen (20), Karten (20), Module (21, 22, 23), die auf einem gemeinsamen Board (9) beinhaltet sind, und/oder Peripheriegeräte (23) und/oder
b) das Datenverarbeitungssystem (1) ein persönliches oder kommerzielles Datenverarbeitungssystem (1) oder ein Labor- oder Industrie-Datenverarbeitungssystem (1), insbesondere für die Steuertechnologie, wie zum Beispiel Maschinen-, Anlagen-, Schaltstations- oder Versorgungssteuerung und/oder Lenkung ist und/oder
c) der Wellenleiter (7; 72) ein systemweites Netzwerk oder ein Teil davon ist.

## Revendications

1. Bus de communications permettant de transmettre des signaux hyperfréquences (S1, ..., S4), comprenant un guide d'ondes hyperfréquence (7 ; 72) reliant des unités de traitement numérique de données (2), chaque unité de traitement (2) pouvant être connectée à un moyen émetteur-récepteur hyperfréquence (6) permettant de coupler les signaux hyperfréquences (S1, ..., S4) en entrée et en sortie du guide d'ondes (7 ; 72),
a) chaque moyen émetteur-récepteur (6) comprenant un modulateur hyperfréquence (60), un démodulateur hyperfréquence (61) et une antenne (8) formant une seule pièce avec l'unité de traitement (2) respective,
b) le guide d'ondes (7 ; 72) possédant un moyen de montage (10b) permettant d'assurer un montage mécanique et un moyen de couplage (10c) permettant d'assurer un couplage hyperfréquence des unités de traitement (2) au guide d'ondes (7 ; 72) d'une manière déconnectable, et
**caractérisé en ce que** :
c) le guide d'ondes (7 ; 72) fait partie d'un bâti de montage (13b) permettant d'empiler et de relier entre elles plusieurs unités de traitement (2) pour former un système informatique modulaire (1).

2. Bus de communications selon la revendication 1, **caractérisé en ce que** :
a) le guide d'ondes (7 ; 72) est intégré au bâti de montage (13b) et, plus particulièrement, est conçu comme le bâti (13b) proprement dit, et
b) le guide d'ondes (7 ; 72) comprend plus particulièrement des connexions hyperfréquences permettant de relier entre eux plusieurs bâtis de montage (13b) pour former un système informatique modulaire étendu (1).

3. Bus de communications selon l'une quelconque des revendications précédentes, **caractérisé en ce que** :
a) le guide d'ondes (7 ; 72) est un guide d'ondes polyvalent à atténuation non négligeable, plus particulièrement supérieure à 2,5 dB/100m, de préférence de 5 dB/100 m et idéalement supérieure à 10 dB/100 m, et/ou
b) le guide d'ondes (7 ; 72) possède des embouts polyvalents (15) absorbant les hyperfréquences, et/ou
c) le guide d'ondes (7 ; 72) est un guide d'ondes creux métallique ou diélectrique non rayonnant (7 ; 72) transmettant au moins un mode TE et/ou TM et possède plus particulièrement une section transversale rectangulaire, ronde ou coaxiale.

4. Bus de communications selon l'une quelconque des revendications précédentes, **caractérisé en ce que** :
a) le moyen de montage (10b) prend la forme de rails de montage (10b) qui sont solidaires d'une partie extérieure, plus particulièrement du dessus, du guide d'ondes (7 ; 72) et qui sont conçus pour s'associer à des supports de montage (10a) fixés aux unités de traitement (2), et
b) plus particulièrement, les rails de montage (10b) sont des rails DIN standards et les supports de montage (10a) sont des supports DIN standards.

5. Bus de communications selon l'une quelconque des revendications précédentes, **caractérisé en ce que** le moyen de couplage (10c) est une fente (10c) ou une connexion conçues de manière à assurer un couplage hyperfréquence serré de l'antenne (8) au guide d'ondes (7 ; 72) lorsqu'un support de montage (10a) de l'unité de traitement (2) coopère avec le moyen de montage (10b) .

6. Bus de communications selon l'une quelconque des revendications précédentes, **caractérisé en ce que** :
a) les moyens de montage et de couplage (10b, 10c) occupent des positions discrètes ou réparties de façon continue le long du guide d'ondes (7 ; 72), et/ou
b) un support ou des supports de montage (10a) de l'unité de traitement (2) est ou sont susceptible(s) de coulisser ou de s'enficher sur le moyen de montage (10b).

7. Bus de communications selon l'une quelconque des revendications précédentes, **caractérisé en ce que** :
a) l'antenne (8) est désadaptée pour n'extraire qu'une petite partie de l'énergie des signaux hyperfréquences acheminée dans le guide d'ondes (7 ; 70, 71, 72), et/ou
b) une antenne (8) ou un certain nombre d'antennes (8) sont présentes par unité de traitement (2) .

8. Bus de communications selon l'une quelconque des revendications précédentes, **caractérisé en ce que** :
a) chaque moyen émetteur-récepteur (6) comprend un moyen permettant de convertir des signaux de données numériques en signaux hyperfréquences modulés en large bande (S1, ..., S4) et inversement, et
b) le bus de communications comprend des moyens de multiplexage en fréquence (6, 17) permettant de produire des signaux hyperfréquences codés en fréquence (S1, ..., S4 ; S) et de définir des voies de communications indépendantes au sein du guide d'ondes (7 ; 72) .

9. Bus de communications selon l'une quelconque des revendications précédentes, **caractérisé en ce que** :
a) le bus de communications est conçu pour un trafic de données à grande vitesse interne à un ordinateur de telle sorte que les signaux hyperfréquences (S1, ..., S4 ; S) transmettent des données internes à un ordinateur entre les unités de traitement numérique (2), et/ou
b) les moyens de multiplexage en fréquence (6, 17) comprennent des moyens matériels et/ou logiciels permettant une gestion globale des fréquences sur le bus de communications.

10. Bus de communications selon l'une quelconque des revendications précédentes, **caractérisé en ce que** :
a) les moyens de multiplexage en fréquence (6, 17) comprennent des moyens permettant d'attribuer des fréquences particulières (f1, ..., f4) à des signaux hyperfréquences particuliers (S1, ..., S4) et/ou à des unités de traitement émettrices et/ou réceptrices particulières (2) et/ou à des groupes particuliers d'unités de traitement émettrices et réceptrices (2), et/ou
b) les moyens de multiplexage en fréquence (6, 17) comprennent des moyens permettant l'attribution dynamique de bande passante à des voies de communications individuelles en fonction d'un type de signal hyperfréquence (S1, ..., S4) ou d'unité de traitement (2) associé à la voie de communications.

11. Bus de communications selon l'une quelconque des revendications précédentes, **caractérisé en ce que** :
a) les unités de traitement (2) sont ou comprennent des sous-ensembles (20), des cartes (20), des modules (21, 22, 23) montés sur une carte commune (9) tels que des modules de traitement et/ou mémoires (21, 22) sur une carte à circuit imprimé (9), une carte multicouche (9) ou une carte-mère (9) d'ordinateur, et/ou des dispositifs périphériques (23) tels que des dispositifs d'entrée/sortie (23), des lecteurs (231) ou des dispositifs de stockage, et/ou
b) le bus de communications comprend une pluralité de guides d'ondes hyperfréquences (7 ; 72), de préférence interconnectés et/ou agencés sous forme de fond de panier sur la bâti (13b).

12. Bus de communications selon l'une quelconque des revendications précédentes, **caractérisé en ce que** :
a) le bus de communications comprend une hiérarchie multicouche de guides d'ondes (7 ; 72, 71, 70) comprenant le guide d'onde (7 ; 72) sur bâti reliant entre elles les unités de traitement (2) et des guides d'ondes intra-unité (71, 70) reliant des puces (21, 210, 211 ; 22, 220) sur une carte (9) ou reliant des puces (210, 211, 220) à l'intérieur d'un module de traitement ou mémoire (20, 21, 22, 23), et
b) plus particulièrement, des liaisons directes entre guides d'ondes sont utilisées pour transmettre des signaux hyperfréquences (S1, ..., S4) entre différentes couches de guides d'ondes (70, 71, 72).

13. Bus de communications selon l'une quelconque des revendications précédentes, **caractérisé en ce que** :
a) le bus de communications comprend des moyens permettant d'alimenter en énergie hyperfréquence les unités de traitement (2) par l'intermédiaire du guide d'ondes (7 ; 72), et les unités de traitement (2) comprennent des antennes (80 ; 8) permettant d'extraire une partie appropriée de l'énergie hyperfréquence, et/ou
b) des moyens de refroidissement thermique pour les unités de traitement (2) comprennent les guide d'ondes (7 ; 72) jouant le rôle de milieu caloporteur et/ou de dissipateur thermique.

14. Système informatique modulaire (1), comprenant un bus de communications doté d'un guide d'ondes hyperfréquence (7 ; 72) permettant de relier des unités de traitement numérique de données (2) selon l'une quelconque des revendications précédentes.

15. Système informatique modulaire (1) selon la revendication 14, **caractérisé en ce que** :
a) les unités de traitement (2) sont ou comprennent des sous-ensembles (20), des cartes (20), des modules (21, 22, 23) montés sur une carte commune (9) et/ou des dispositifs périphériques (23), et/ou
b) le système informatique (1) est un système informatique personnel ou commercial (1) ou un système informatique de laboratoire ou industriel (1), plus particulièrement pour la technologie de commande, telle que la commande et le pilotage de machines, d'installations, de sous-stations ou de réseaux publics, et/ou
c) le guide d'ondes (7 ; 72) est ou fait partie d'un réseau de systèmes SAN.
